# EUROPÄISCHE PATENTSCHRIFT

(11) **EP 4 300 094 B1**
(45) Veröffentlichungstag und Bekanntmachung des Hinweises auf die Patenterteilung: **13.08.2025**
(21) Anmeldenummer: 23180851.0
(22) Anmeldetag: 22.06.2023
(51) Int. Cl.: G01N 29/036, F01N 11/00, F01N 3/08

(54) **SORPTIONSFILTER MIT INTEGRIERTER SENSOREINHEIT**
SORPTION FILTER HAVING AN INTEGRATED SENSOR UNIT
FILTRE À SORPTION DOTÉ D'UNE UNITÉ DE DÉTECTION INTÉGRÉE

(30) Priorität: 01.07.2022 DE 102022116448
(43) Veröffentlichungstag der Anmeldung: 03.01.2024
(73) Patentinhaber: Institut Für Luft- Und Kältetechnik gGmbh, 01309 Dresden (DE)
(72) Erfinder: Heidenreich, Ralf, 01309 Dresden (DE); Holfeld, Stefan, 01309 Dresden (DE); Lauer, Martin, 01309 Dresden (DE); Türke, Alexander, 01309 Dresden (DE)
(74) Vertreter: Werner, André

(56) Entgegenhaltungen:
- DE-A1- 102006 027 077
- DE-A1- 2 609 869
- DE-C1- 19 831 414
- DE-C2- 19 931 007
- US-A1- 2004 031 386
- US-A1- 2014 196 519

## Beschreibung

Die Erfindung betrifft einen Sorptionsfilter mit einer Sensoreinheit zur Überwachung des Beladungszustandes eines unidirektional durchströmten Sorptionsmittels. Der Sorptionsfilter ist unter anderem in Klima- und Belüftungsanlagen zur Zuluft- und Umluftreinigung einsetzbar.

Sorptionsfilter werden in einer Reihe von Anwendungen zur Luftreinhaltung bzw. Schadstofffilterung genutzt, um schädliche oder unerwünschte fluide Stoffe aus einem Rohgas abzuscheiden und so ein Reingas zu erzeugen. In vielen Fällen handelt es sich bei dem im Sorptionsfilter enthaltenen Sorptionsmittel um Aktivkohle, weshalb Sorptionsfilter häufig auch als Aktivkohlefilter bezeichnet werden. Apparativ kann ein Sorptionsfilter beispielsweise als eine unidirektional durchströmte Kartusche aufgebaut sein, die mit dem Sorptionsmittel gefüllt ist. Zur Schadstofffilterung strömt das Rohgas über einen Filtereingang in die Filterkartusche ein und über einen gegenüberliegenden Filterausgang als Reingas ab.

Die physikalische Wirkung dieser Sorptionsfilter beruht auf einer großen inneren Oberfläche des Sorptionsmittels. Bei Beaufschlagung des unbeladenen Sorptionsmittels, auch Sorbent bezeichnet, mit dem Rohgas, welches den zu filternden bzw. zu sorbierenden Stoff - das Sorptiv - enthält, wird das Sorptiv an der Oberfläche des Sorbents angelagert bzw. adsorbiert bis das Sorptionsmittel beladen ist. Die Beladung des Sorptionsmittels bezeichnet die Menge an Sorptiv (also zum Beispiel an Schadstoffen), bei der sich ein Gleichgewicht zwischen Anlagerung und Abgabe des zu sorbierenden Stoffes, d. h. eine Sättigung, einstellt. Nach der Anlagerung wird der adsorbierte Stoff auch Adsorpt genannt; das System aus sorbiertem Stoff und Sorptionsmittel, d. h. das beladene Sorptionsmittel, wird als Sorbat bezeichnet. Der Begriff Sorptionsmittel steht im vorliegenden Kontext übergreifend für den unbeladenen Zustand (Sorbent) und den beladenen Zustand (Sorbat).

Bei unidirektional durchströmten Sorptionsfiltern, wie zum Beispiel bei den oben beschriebenen Kartuschenfiltern, oder in einer unidirektional durchströmten Schüttung des Sorptionsmittels schreitet die Beladung des Sorptionsmittels in der Strömungsrichtung der Durchströmung des Sorptionsmittels voran. Die Grenzregion zwischen beladenem und unbeladenem Sorptionsmittel, in der die Adsorption aktiv stattfindet, wird als Adsorptionszone bezeichnet. Hinter bzw. stromaufwärts der Adsorptionszone ist das Sorptionsmittel vollständig beladen. Bei Betrieb sind zu einem bestimmten Zeitpunkt innerhalb eines Sorptionsfilters entlang der Strömungsrichtung also ein Bereich mit beladenem Sorptionsmittel, die Adsorptionszone sowie ein Bereich mit unbeladenem Sorptionsmittel ausgebildet. Die Grenzfläche der Adsorptionszone zum noch unbeladenen Sorptionsmittel wird vorliegend als Adsorptionsfront bezeichnet.

Wenn das gesamte im Sorptionsfilter enthaltene Sorptionsmittel beladen ist, d. h., wenn zum Beispiel die Adsorptionszone den filterausgangsseitigen Endbereich des Sorptionsmittels erreicht hat, verliert der Sorptionsfilter seine Wirkung. Der Filter ist dann verbraucht. Die zu filternden - unerwünschten oder schädlichen - Stoffe können nun zusammen mit dem Reingas aus dem Sorptionsfilter austreten. Diesen als Durchbruch des Sorptionsmittels bzw. Filterdurchbruch bezeichneten Zustand gilt es zu vermeiden.

Charakterisiert werden kann die Beladung des Sorptionsfilters bzw. des gesamten Sorptionsmittels im Sorptionsfilter durch dessen Beladungszustand, der im Kontext der vorliegenden Offenbarung als der Fortschritt bis zum Erreichen des Filterdurchbruchs definiert sein soll.

Die Beladung des im Sorptionsfilter enthaltenen Sorptionsmittels hängt von vielen Faktoren ab, nämlich zum Beispiel von der Art des zu filternden Schadstoffs bzw. der Rohgas-Zusammensetzung, der Temperatur, der Luftfeuchte oder vom verwendeten Sorptionsmittel. Aufgrund dieser komplexen Abhängigkeit ist eine betriebszeit- oder massezunahmebasierte Beladungs- bzw. Verbrauchsprognose häufig unzureichend, um einen Filtertausch nach größtmöglicher Nutzungsdauer, d. h. rechtzeitig, kurz vor dem Durchbruch, vornehmen zu können. Bei ebenfalls möglicher Detektion des Filterdurchbruchs mit filterausgangsseitig installierten Gassensoren müssen eine temporäre Schadstoffbelastung und ein unplanbarer Filtertausch hingenommen werden.

DE 26 09 869 A1 offenbart ein Verfahren und eine Schaltungsanordnung zur Ermittlung des Beladezustandes und des Filterdurchbruchs von Adsorptionsbetten. Die Messung der Beladung und die Bestimmung des Filterdurchbruchs erfolgt, indem das Adsorptionsmittel als dielektrischer Füllstoff zwischen den Platten eines elektrischen Kondensators verwendet wird, durch den das Gas oder der Dampf frei strömen kann. Wenn es auf dem Adsorptionsmittel adsorbiert wird, ändert sich seine Dielektrizitätskonstante mit einer entsprechenden Änderung der Kapazität. Dies wird dann als Maß für die Beladung des Adsorbens verwendet.

DE 199 31 007 C2 beschreibt ein Verfahren und eine Vorrichtung zur Bestimmung des Speicherzustands eines ammoniakspeichernden, selektiv katalytisch reduzierenden Katalysators, wobei die Änderung mindestens einer physikalischen Eigenschaft des mit dem Ammoniakspeichervorgang sich verändernden Katalysatormaterials erfasst wird. Die Messung erfolgt am Katalysatormaterial selbst oder an einem Stellvertreterwerkstoff, indem ein Messaufnehmer auf das Katalysatormaterial oder auf den Stellvertreterwerkstoff aufgebracht oder in unmittelbaren Kontakt mit ihm gebracht wird.

DE 198 31 414 C1 offenbart ferner eine Filtereinrichtung mit einem Partikelfilter und/oder mit einem Adsorptionsfilter, die zur Bestimmung ihres Beladungszustandes einen mechanischen, piezokeramischen Resonator aufweist. Der mechanische Resonator ist hierbei mit einer bestimmten Quantität eines Partikel- und/oder Adsorber-Filtermediums versehen.

Es ist Aufgabe der Erfindung, eine Sensoreinheit zur Überwachung des Sorptionsmittels in einem Sorptionsfilter bereitzustellen, mittels der der Beladungszustand bzw. das Fortschreiten der Beladung des Sorptionsmittels in einem Sorptionsfilter ermittelt werden kann, um eine effiziente Filterausnutzung bei Vermeidung von Filterdurchbrüchen zu ermöglichen.

Diese Aufgabe wird durch einen eine Sensoreinheit zur Überwachung des Beladungszustandes eines unidirektional durchströmten Sorptionsmittels aufweisenden Sorptionsfilter mit den Merkmalen nach Anspruch 1 gelöst.

Zweckmäßige Weiterbildungen der Erfindung sind in den Ansprüchen 2 bis 6 aufgeführt.

Das Sorptionsmittel, dessen Beladungszustand während der Sorptionsfilterung eines zu filternden Rohgases mittels der erfindungsgemäßen Sensoreinheit überwacht wird, ist als ein unidirektional durchströmter Sorptionsmittelformkörper ausgebildet. Der Sorptionsmittelformkörper kann zum Beispiel ein Sinterkörper oder eine Schüttung aus dem Sorptionsmittel sein, der oder die in einem Sorptionsfilter, zum Beispiel in der Filterkartusche eines Kartuschenfilters, eingebracht oder verbaut ist. Der erfindungsgemäße, das Sorptionsmittel enthaltende Sorptionsfilter umfasst die Sensoreinheit als integrierte Baueinheit.

Der zu überwachende Sorptionsmittelformkörper weist eine Einströmoberfläche zur Einleitung des zu filternden Rohgases sowie eine der Einströmoberfläche in Strömungsrichtung beabstandet gegenüberliegende Ausströmoberfläche zur Ableitung eines nach der Sorptionsfilterung aus dem Rohgas gebildeten Reingases auf. Der in Strömungsrichtung kleinste Abstand in dem zwischen der Einströmoberfläche und der Ausströmoberfläche durchströmten Sorptionsmittel wird als Durchströmtiefe des Sorptionsmittelformkörpers bezeichnet bzw. definiert.

Während der Sorptionsfilterung bildet sich infolge der Durchströmung des Sorptionsmittelformkörpers und der Beladung des Sorptionsmittels eine Adsorptionszone quer zur Strömungsrichtung zwischen beladenem Sorptionsmittel und unbeladenem Sorptionsmittel aus. Diese Adsorptionszone bewegt sich im Sorptionsmittelformkörper im Zuge der Beladung von der Einströmoberfläche zur Ausströmoberfläche des Sorptionsmittelformkörpers. Abgegrenzt wird die Adsorptionszone vom jeweils noch unbeladenen Sorptionsmittel durch eine Absorptionsfront. Der in Strömungsrichtung größte Abstand zwischen der Einströmoberfläche und der Adsorptionsfront wird als momentane Beladungstiefe des Sorptionsmittelformkörpers bezeichnet bzw. definiert.

Nach Maßgabe der Erfindung ist die Sensoreinheit eingerichtet, den Beladungszustand des gesamten Sorptionsmittels im Sorptionsmittelformkörper durch direkte oder indirekte Lokalisierung der Adsorptionszone im Sorptionsmittelformkörper zu bestimmen. Bei Detektion oder Prognose einer vorgegebenen, maximal zulässigen Beladungstiefe gibt die Sensoreinheit ein Warnsignal aus.

Die Sensoreinheit besitzt erfindungsgemäß ein Sensorsorptionsformelement, welches aus einem sensitiven Material besteht, nachfolgend Sensorsorptionsmittel genannt. Das Sensorsorptionsformelement ist an mindestens zwei gegenüberliegenden Seiten in einer Einfassung gehalten und kontaktiert. Diese Einfassung ist dazu eingerichtet, mechanische Schwingungen in das Sensorsorptionsformelement einzukoppeln sowie - nach deren Wechselwirkung mit dem Sensorsorptionsmittel - zur signaltechnischen Erfassung auszukoppeln.

Die Sensoreinheit umfasst eine Steuerungs- und Auswerteeinheit, die mit der Einfassung des Sensorsorptionsformelements - direkt oder indirekt - signaltechnisch zur zeitaufgelösten Verarbeitung und Auswertung der erfassten mechanischen Schwingungen verbunden ist

Die Steuerungs- und Auswerteeinheit ist eingerichtet, das Warnsignal auszugeben, wenn die zeitaufgelöst verarbeiteten und ausgewerteten Werte der erfassten mechanischen Schwingungen im zeitlichen Verlauf einen vorgegebenen Grenzwert über- oder unterschreiten.

Das Sensorsorptionsmittel ist schließlich nach Maßgabe der Erfindung so ausgebildet und/oder ausgewählt, dass die zur Ausgabe des Warnsignals führende Grenzwertüber- oder -unterschreitung einer vorgegebenen, maximal zulässigen Beladungstiefe des Sorptionsmittelformkörpers entspricht. Hierzu kann die Sensoreinheit im Bereich der Position der maximal zulässigen Beladungstiefe im, am oder neben dem Sorptionsmittelformkörper, also zum Beispiel auch in einem Bypass der Filterkartusche, angeordnet sein. Das Sensorsorptionsmittel besteht in diesem Fall vorzugsweise aus dem gleichen Material wie das zu überwachende Sorptionsmittel. Ebenso kann ein Werkstoff als Sensorsorptionsmittel gewählt werden, der eine zeitlich verzögerte Beladungscharakteristik besitzt. Die Sensoreinheit ist dann zum Beispiel stromaufwärts im, am oder neben dem Sorptionsmittelformkörper positionierbar - oder auch kontaktfrei zum Sorptionsmittelformkörper einströmseitig im Rohgas. Wird dagegen ein Werkstoff mit einer zeitlich gegenüber dem zu überwachenden Sorptionsmittel beschleunigten Beladungscharakteristik gewählt, kann die Positionierung stromabwärts im, am oder neben dem Sorptionsmittelformkörper erfolgen, bei besonders beladungssensitiven Werkstoffen ggf. auch reingasseitig außerhalb des Sorptionsmittelformkörpers. Die letztgenannte Positionierung der Sensoreinheit ist beispielsweise bei sehr kompakten Sorptionsfiltern ohne Integrationsmöglichkeit bzw. bei sehr geringer Durchströmtiefe anwendbar, jedoch nur, wenn ein geringer Schadstoffdurchbruch noch zulässig ist. Befindet sich die Sensoreinheit nicht im Bereich der maximal zulässigen Beladungstiefe, kann die Sensoreinheit durch eine entsprechende Kalibrierung an einem Referenzsorptionsmittelformkörper so eingestellt sein, dass die zur Ausgabe des Warnsignals führende Grenzwertüber- oder -unterschreitung der vorgegebenen, maximal zulässigen Beladungstiefe des Sorptionsmittelformkörpers entspricht.

Die erfindungsgemäße Sensoreinheit bzw. der Sorptionsfilter zeichnen sich dadurch aus, dass bei deren Anwendung der Beladungszustand des zu überwachenden Sorptionsmittels bei beliebigen Betriebsbedingungen bestimmbar ist. So kann ein betriebskritischer Beladungszustand auch bei instationären Verhältnissen, zum Beispiel bei ungleichmäßig verlaufender Rohgasbeaufschlagung oder schwankender Schadstoffbelastung im Rohgas, erkannt werden. Die Aufnahmekapazität des Sorptionsmittels im Sorptionsfilter ist - bei Vermeidung von Filterdurchbrüchen - in nahezu vollständigem Umfang nutzbar.

Vermieden wird dagegen die - schwierig zu bestimmende - quantitative Ermittlung der Gesamtbeladung des Sorptionsmittels, wodurch letztlich Aufwand und Kosten der Filterüberwachung reduziert werden. Je nach Anwendungsfall kann die Sensoreinheit rohgasseitig in eine bestimmte Zone des Sorptionsmittelformkörpers oder auch am Filterauslass im Abströmbereich des Reingases positioniert werden.

Vorzugsweise liegt die vorgegebene, maximal zulässige Beladungstiefe im Bereich von 60 % bis 98 % der Durchströmtiefe des Sorptionsmittelformkörpers; besonders bevorzugt liegt die vorgegebene, maximal zulässige Beladungstiefe im Bereich von 66 % bis 67 %, im Bereich von 80 % ± 5 % und im Bereich von 95 % bis 98 % der Durchströmtiefe. Der Bereich von 66 % bis 67 % bzw. 2/3 der Durchströmtiefe bietet ein erhöhtes Maß an Sicherheit bei Filterung von Schadstoffen, für die kein Filterdurchbruch zulässig ist. Der Bereich von 95 % bis 98 % der Durchströmtiefe erlaubt ein Höchstmaß der Sorptionsmittelausnutzung. Der Bereich von 80 % ± 5 % der Durchströmtiefe bietet ein ausgewogenes Verhältnis aus Filternutzung und Durchbruchssicherheit für eine Vielzahl von Filteranwendungen.

Erfindungsgemäß weist die Sensoreinheit einen Schwingungserreger, zum Beispiel ein Piezoelement zur Erregung mechanischer Schwingungen im Sensorsorptionsformelement, das als Schwingungsplättchen ausgebildet ist, auf. Der Schwingungserreger ist hierzu mit der Einfassung des Sensorsorptionsformelements so verbunden oder an dieses so angebunden, dass mechanische Schwingungen in das in der Einfassung gehaltene Sensorsorptionsformelement ein- und auskoppelbar sind. D. h., die mit dem Schwingungserreger erzeugten mechanischen Schwingungen werden in das Sensorsorptionsformelement eingekoppelt, wechselwirken mit dem Sensorsorptionsmittel und werden anschließend über die Einfassung des Sensorsorptionsformelements wieder ausgekoppelt, um in dem gleichzeitig als Schwingungsdetektor dienenden Schwingungserreger signaltechnisch erfasst zu werden.

Das in der Einfassung gehaltene Sensorsorptionsformelement bildet in dieser Ausgestaltung ein Schwingsystem, das mit einer bestimmten Erregerfrequenz mittels des Schwingungserregers zur mechanischen Schwingung angeregt wird. Das Sensorsorptionsmittel bzw. das Sensorsorptionsformelement erfährt an der gewählten Einbauposition im Sorptionsmittelformkörper eine identisch lokale Beaufschlagung und Beladung wie das Sorptionsmittel. Durch Sorption findet im Sensorsorptionsmittel eine Masseänderung statt, d. h., die Masse des Sensorsorptionsformelements nimmt zu. Hierdurch wiederum ändert sich die Eigenfrequenz des Schwingsystems. Diese detektierbare Änderung des Schwingverhaltens ermöglicht schließlich Rückschlüsse auf die Beladung des Sensorsorptionsmittels und somit auch des Sorptionsmittels.

Die zeitaufgelösten mechanischen Schwingungen werden hierzu - über geeignete Signalleitungen oder auch drahtlos - an die Steuerungs- und Auswerteeinheit zur zeitaufgelösten Verarbeitung und Auswertung der erfassten mechanischen Schwingungen weitergeleitet. Als Größe der mechanischen Schwingungen kann beispielsweise die Auslenkung des schwingenden Sensorsorptionsformelements erfasst werden; als verarbeitete und ausgewertete Größe eignet sich die Schwingungsamplitude bzw. die Maximalamplitude der Auslenkung. Die Steuerungs- und Auswerteeinheit kann zudem zur Steuerung des Schwingungserregers eingerichtet sein.

Das masseveränderliche Schwingsystem ist beispielsweise so ausgebildet, d. h., insbesondere das Sensorsorptionsformelement ist so dimensioniert und gestaltet, dass die Eigenfrequenz bei unbeladenem Sensorsorptionsmittel oberhalb der Erregerfrequenz des Schwingsystems liegt. Durch die Massezunahme des Sensorsorptionsformelements kommt es bei einer bestimmten Beladung zur Resonanz des Schwingsystems. Diese Resonanz kann durch Auswertung der Schwingungsamplitude des Sensorsorptionsformelements besonders gut erfasst bzw. erkannt werden. Das Schwingsystem ist hierbei vorzugsweise so ausgelegt bzw. kalibriert, dass die Resonanz dann erreicht wird, wenn das Sorptionsmittel an einer vorgegeben Position vollständig beladen ist bzw. die Adsorptionsfront die vorgegebene, maximal zulässige Beladungstiefe erreicht hat.

Ferner kann zur (quasi-)kontinuierlichen Bestimmung der Eigenfrequenz des Schwingsystems der Schwingungserreger so angesteuert werden, dass eine kurze Impulsanregung stattfindet; die Schwingungsantwort wird dann in der Steuerungs- und Auswerteeinheit verarbeitet und ausgewertet. Tritt eine Änderung im Schwingungsverhalten auf, indiziert dies wiederum den Beginn der Massezunahme des Sensorsorptionsmittels.

Die Erfindung ist nachfolgend anhand von Ausführungsbeispielen und mit Bezug auf die schematischen Zeichnungen näher erläutert, wobei gleiche oder ähnliche Merkmale mit gleichen Bezugszeichen versehen sind; dazu zeigen
- Fig. 1:: einen Sorptionsfilter nach dem Stand der Technik in Längsschnittdarstellung,
- Fig. 2:: eine in einem Sorptionsfilter integrierte Sensoreinheit mit mechanischem Schwingungserreger in Längsschnittdarstellung,
- Fig. 3: das Schwingsystem der Sensoreinheit mit mechanischem Schwingungserreger als mechanisches Modell, und
- Fig. 4: ein Schwingungsamplituden-Masseänderungs-Diagramm einer Sensoreinheit mit mechanischem Schwingungserreger.

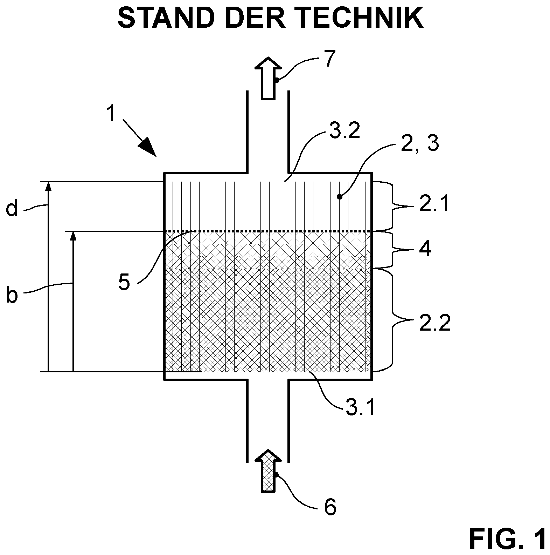

Die Fig. 1 zeigt einen Sorptionsfilter 1 nach dem Stand der Technik, der als eine unidirektional durchströmte Filterkartusche ausgeführt ist. Das Innere der Kartusche ist mit dem Sorptionsmittel 2 gefüllt, wobei das Sorptionsmittel 2 im Inneren der Kartusche - bedingt durch die Wandungen der Kartusche - einen mantelseitig umschlossen Sorptionsmittelformkörper 3 ausbildet. Das Rohgas 6 wird über den - in Fig. 1 unten angeordneten - Filtereingang eingeleitet; das Reingas 7 tritt über den - in Fig. 1 oben angeordneten - Filterausgang aus. Der Sorptionsmittelformkörper 3 besitzt filtereingangs- bzw. einströmseitig die Einströmoberfläche 3.1, die mit dem Rohgas 6 beaufschlagt wird. Filterausgangs- bzw. abströmseitig befindet sich die Ausströmfläche 3.2 des Sorptionsmittelformkörpers 3, an der das im Sorptionsmittel 2 gefilterte Rohgas 6 als Reingas 7 den Sorptionsmittelformkörper 3 verlässt. Als Durchströmtiefe d ist der kleinste Abstand von der Einströmoberfläche 3.1 hin zur Ausströmfläche 3.2 definiert; die Durchströmtiefe d ist in Fig. 1 identisch mit der Längsausdehnung des zylindrischen Sorptionsmittelformkörpers 3.

Während der Beaufschlagung mit dem Rohgas 6 wird das Sorptionsmittel 2 beladen, d. h., das vor Beginn der Rohgasbeaufschlagung vollständig unbeladene Sorptionsmittel 2.1 nimmt sukzessive ein im Rohgas 6 enthaltenes Sorptiv, zum Beispiel einen zu filternden Schadstoff, durch Adsorption auf, wodurch sich - zunächst im Bereich der Einströmoberfläche 3.1 - die Adsorptionszone 4 ausbildet. Die Adsorptionszone 4 wandert bei fortschreitender Beladung des Sorptionsfilters 1 in Strömungsrichtung durch das Sorptionsmittel 2 bzw. durch den Sorptionsmittelformkörper 3 hindurch, wobei hinter bzw. stromaufwärts der Adsorptionszone 4 ein Bereich mit (vollständig) beladenem Sorptionsmittel 2.2 verbleibt. Zum (noch) unbeladenen Sorptionsmittel 2.1 hin ist die Adsorptionszone 4 durch die Adsorptionsfront 5 abgegrenzt.

Die zu einem bestimmten Zeitpunkt während der Beladung des Sorptionsfilters 1 vorliegende, d. h. momentane, Position der Adsorptionsfront 5 im Sorptionsmittelformkörper 3 ist durch die (momentane) Beladungstiefe b charakterisiert, die als größter Abstand von der Einströmoberfläche 3.1 hin zur Adsorptionsfront 5 definiert ist.

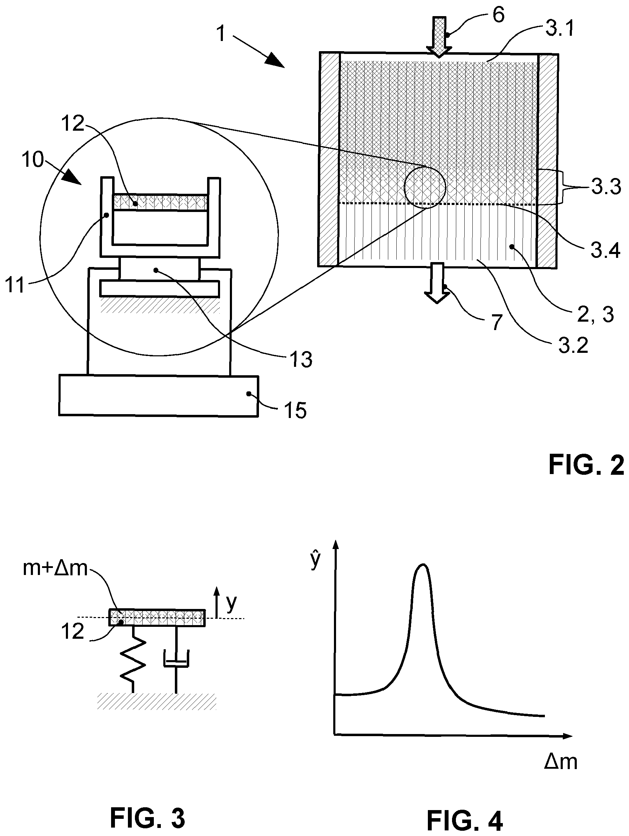

Der grundsätzliche Aufbau und die Wirkungsweise des Sorptionsfilters 1 nach Fig. 2 entsprechen denen nach Fig. 1. Zusätzlich integriert in den Sorptionsfilter 1 ist die Sensoreinheit 10, die bei circa 2/3 der Durchströmtiefe d des Sorptionsmittelformkörpers 3 positioniert ist.

Die Ausführung der Sensoreinheit 10 gemäß Fig. 2 weist die Einfassung 11 auf, in die das als Schwingungsplättchen ausgebildete Sensorsorptionsformelement 12 eingefügt ist. Das Sensorsorptionsformelement 12 besteht aus dem Sensorsorptionsmittel, welches stofflich dem Sorptionsmittel 2 des Sorptionsfilters 1 entspricht.

Die Einfassung 11 ist mit dem Schwingungserreger 13, einem Piezoelement, verbunden, mittels dem mechanische Schwingungen erzeugt und über die Einfassung 11 in das Sensorsorptionsformelement 12 eingekoppelt werden. Mit dem Schwingungserreger 13 wird das Sensorsorptionsformelement 12 zu mechanischen Schwingungen angeregt, die nach Wechselwirkung mit dem Sensorsorptionsmittel über die Einfassung 11 wieder ausgekoppelt, an dem Schwingungserreger 13 weitergeleitet und in elektrische Signale gewandelt werden. Die Erfassung mechanischer Schwingungen kann zum Beispiel durch Aufnahme der Impulsantwort nach kurzer, impulsartiger Schwingungsanregung erfolgen.

Die Ansteuerung des Schwingungserregers 13 sowie die Verarbeitung der über den Schwingungserreger 13 erfassten mechanischen Schwingungen erfolgt mittels der signaltechnisch mit dem Schwingungserreger 13 verbundenen Steuerungs- und Auswerteeinheit 15.

Das plättchenförmige, aus dem Sensorsorptionsmittel bestehende Sensorsorptionsformelement 12 wird, wie im mechanischen Modell nach Fig. 3 veranschaulicht, mit der Auslenkung y ausgelenkt. Durch die Beladung des Sensorsorptionsmittels ändert sich die Masse m des Sensorsorptionsformelements 12 um den Betrag Δm. Diese Masseänderung Δm führt zu einem veränderten Schwingungsverhalten des Sensorsorptionsformelements 12.

Im Ausführungsbeispiel ist das Sensorsorptionsformelement 12 so dimensioniert, dass die Eigenfrequenz des Schwingsystems, d. h. des in der Einfassung 11 gehaltenen Sensorsorptionsformelements 12, im unbeladenen Zustand des Sensorsorptionsmittels oberhalb der zur Schwingungsanregung genutzten Erregerfrequenz liegt. Durch die Masseänderung Δm, d. h. vorliegend durch die Massezunahme, bei Beladung des Sensorsorptionsmittels kommt es zur Änderung der Eigenfrequenz des Schwingsystems.

Um diese Änderung der Eigenfrequenz besonders gut detektieren zu können, ist das Sensorsorptionsformelement 12 so dimensioniert, dass bei einer vorgegebenen Beladung des Sensorsorptionsmittels, d. h. bei einer vorspezifizierten Masseänderung Δm, Resonanz im Schwingsystem auftritt. Im Ausführungsbeispiel liegt dieser Fall vor, wenn die Adsorptionszone 4 die Position der Sensoreinheit 10 erreicht. Ist das mit dem Sorptionsmittel 2 des Sorptionsfilters 1 identische Sensorsorptionsmittel vollständig beladen, tritt im Schwingsystem der Sensoreinheit 10 Resonanz ein.

Als zeitaufgelöst verarbeitete und ausgewertete Werte der erfassten mechanischen Schwingungen dient die Amplitude ŷ der Auslenkung des Sensorsorptionsformelements 12. Den Resonanzfall in Abhängigkeit der Masseänderung Δm des Sensorsorptionsformelements 12 bei konstanter Erregerfrequenz veranschaulicht Fig. 4.

### Bezugszeichenliste

- 1: Sorptionsfilter
- 2: Sorptionsmittel
- 2.1: unbeladenes Sorptionsmittel (Sorbent)
- 2.2: beladenes Sorptionsmittel (Sorbat)
- 3: Sorptionsmittelformkörper
- 3.1: Einströmoberfläche
- 3.2: Ausströmoberfläche
- 4: Adsorptionszone
- 5: Adsorptionsfront
- 6: Rohgas
- 7: Reingas
- 10: Sensoreinheit
- 11: Einfassung
- 12: Sensorsorptionsformelement
- 13: Schwingungserreger
- 15: Steuer- und Auswerteeinheit
- b: Beladungstiefe
- bₘₐₓ: maximal zulässige Beladungstiefe
- d: Durchströmtiefe
- m: Masse
- Δm: Masseänderung
- y: Auslenkung
- ŷ: Amplitude der Auslenkung

## Patentansprüche

1. Sorptionsfilter (1), aufweisend ein Sorptionsmittel (2), das zur Sorptionsfilterung eines Rohgases (6) als unidirektional durchströmter Sorptionsmittelformkörper (3) ausgebildet ist, sowie eine Sensoreinheit (10) zur Überwachung des Beladungszustandes des Sorptionsmittels (2), wobei
- der Sorptionsmittelformkörper (3) eine Einströmoberfläche (3.1) zur Einleitung des zu filternden Rohgases (6) und eine der Einströmoberfläche (3.1) in Strömungsrichtung beabstandet gegenüberliegende Ausströmoberfläche (3.2) zur Ableitung eines nach der Sorptionsfilterung aus dem Rohgas (6) gebildeten Reingases (7) aufweist, wobei der in Strömungsrichtung kleinste Abstand in dem zwischen der Einströmoberfläche (3.1) und der Ausströmoberfläche (3.2) durchströmten Sorptionsmittel (2) eine Durchströmtiefe (d) des Sorptionsmittelformkörpers (3) definiert, und
- im Sorptionsmittelformkörper (3) während der Durchströmung und Beladung eine quer zur Strömungsrichtung zwischen beladenem Sorptionsmittel (2.2) und unbeladenem Sorptionsmittel (2.1) ausgebildete Adsorptionszone (4) durch eine Absorptionsfront (5) vom unbeladenen Sorptionsmittel (2.1) abgegrenzt ist, wobei der in Strömungsrichtung größte Abstand zwischen der Einströmoberfläche (3.1) und der Adsorptionsfront (5) eine momentane Beladungstiefe (b) des Sorptionsmittelformkörpers (3) definiert,
**dadurch gekennzeichnet, dass**
- die Sensoreinheit (10) ein aus einem Sensorsorptionsmittel bestehendes Sensorsorptionsformelement (12) aufweist, das in einer Einfassung (11) an mindestens zwei gegenüberliegenden Seiten des Sensorsorptionsformelements (12) gehalten und kontaktiert ist, wobei die Einfassung (11) dazu eingerichtet ist, mechanische Schwingungen in das Sensorsorptionsformelement (12) einzukoppeln sowie zur signaltechnischen Erfassung auszukoppeln,
- die Sensoreinheit (10) ferner eine Steuerungs- und Auswerteeinheit (15) umfasst, die mit der Einfassung (11) des Sensorsorptionsformelements (12) signaltechnisch zur zeitaufgelösten Verarbeitung und Auswertung der erfassten mechanischen Schwingungen verbunden ist, wobei die Sensoreinheit (10) einen mechanischen Schwingungserreger (13) aufweist, mittels dem mechanische Schwingungen in das in der Einfassung (11) gehaltene Sensorsorptionsformelement (12) ein- und auskoppelbar sind, und wobei das in der Einfassung (11) gehaltene Sensorsorptionsformelement (12) in Form eines Schwingungsplättchens ausgebildet ist,
- das als Schwingungsplättchen ausgebildete Sensorsorptionsformelement (12) mit freiliegenden Plattenflächen des Schwingungsplättchens an mindestens zwei gegenüberliegenden, senkrecht zu den Plattenflächen des Schwingungsplättchens liegenden Seiten und senkrecht zu den Plattenflächen des Schwingungsplättchens in der Einfassung (11) gehalten ist,
- die Steuerungs- und Auswerteeinheit (15) eingerichtet ist, ein Warnsignal auszugeben, wenn die zeitaufgelöst verarbeiteten und ausgewerteten Werte der erfassten mechanischen Schwingungen im zeitlichen Verlauf einen vorgegebenen Grenzwert über- oder unterschreiten,
- das Sensorsorptionsmittel so ausgebildet und/oder ausgewählt ist, dass die zur Ausgabe des Warnsignals führende Grenzwertüber- oder -unterschreitung einer vorgegebenen, maximal zulässigen Beladungstiefe (bₘₐₓ) des Sorptionsmittelformkörpers (3) entspricht.

2. Sorptionsfilter (1) nach Anspruch 1, **dadurch gekennzeichnet, dass** die vorgegebene, maximal zulässige Beladungstiefe (bₘₐₓ) im Bereich von 60 % bis 98 % der Durchströmtiefe (d) liegt.

3. Sorptionsfilter (1) nach Anspruch 2, **dadurch gekennzeichnet, dass** die vorgegebene, maximal zulässige Beladungstiefe (bₘₐₓ) im Bereich von 66 % bis 67 %, im Bereich von 80 % ± 5 % oder im Bereich von 95 % bis 98 % der Durchströmtiefe (d) liegt.

4. Sorptionsfilter (1) nach einem der Ansprüche 1 bis 3, **dadurch gekennzeichnet, dass** das Sensorsorptionsmittel stoffgleich mit dem Sorptionsmittel (2) ist, wobei das Sensorsorptionsformelement (12) der Sensoreinheit (10) innerhalb des Sorptionsmittelformkörpers (3) an einer Position angeordnet ist, die der vorgegebenen, maximal zulässigen Beladungstiefe (bₘₐₓ) des Sorptionsmittelformkörpers (3) entspricht.

5. Sorptionsfilter (1) nach einem der Ansprüche 1 bis 4, **dadurch gekennzeichnet, dass** das Sensorsorptionsformelement (12) so dimensioniert oder gestaltet ist, dass die Eigenfrequenz des Schwingungssystems, das durch das in der Einfassung gehaltene Sensorsorptionsformelement (12) gebildet ist, oberhalb der Erregerfrequenz des mechanischen Schwingungserreger (13) liegt.

6. Sorptionsfilter (1)) nach einem der Ansprüche 1 bis 5, **dadurch gekennzeichnet, dass** der mechanische Schwingungserreger (13) ein Piezoelement ist.

## Claims

1. Sorption filter (1), having a sorption agent (2) which is designed as a unidirectionally flowed-through sorption agent moulded body (3) for sorption filtering of a raw gas (6), and a sensor unit (10) for monitoring the loading state of the sorption agent (2), wherein
- the sorption agent moulded body (3) has an inflow surface (3.1) for introducing the raw gas (6) to be filtered and an outflow surface (3. 2) for discharging a clean gas (7) formed from the raw gas (6) after sorption filtering, wherein the smallest distance in the direction of flow in the sorption agent (2) flowed through between the inflow surface (3.1) and the outflow surface (3.2) defines a flow depth (d) of the sorption agent moulded body (3), and
- an adsorption zone (4) formed in the sorption agent moulded body (3) transversely to the direction of flow between loaded sorption agent (2.2) and unloaded sorption agent (2.1) during the flow and loading is separated from the unloaded sorption agent (2.1) by an absorption front (5), wherein the largest distance in the direction of flow between the inflow surface (3.1) and the adsorption front (5) defines an instantaneous loading depth (b) of the sorption agent moulded body (3),
**characterised in that**
- the sensor unit (10) has a sensor sorption mould element (12) consisting of a sensor sorption agent, which is held and contacted in an enclosure (11) on at least two opposite sides of the sensor sorption mould element (12), the enclosure (11) being set up to couple mechanical vibrations into the sensor sorption mould element (12) and to couple them out for signal detection,
- the sensor unit (10) further comprises a control and evaluation unit (15) which is connected to the enclosure (11) of the sensor sorption mould element (12) in terms of signalling technology for time-resolved processing and evaluation of the detected mechanical vibrations, wherein the sensor unit (10) has a mechanical vibration exciter (13), by means of which mechanical vibrations can be coupled into and out of the sensor sorption mould element (12) held in the enclosure (11), and wherein the sensor sorption mould element (12) held in the enclosure (11) is designed in the form of a vibration platelet,
- the sensor sorption mould element (12) in the form of a vibration platelet is held in the enclosure (11) with exposed plate surfaces of the vibration platelet on at least two opposite sides lying perpendicular to the plate surfaces of the vibration platelet and perpendicular to the plate surfaces of the vibration platelet,
- the control and evaluation unit (15) is set up to output a warning signal if the time-resolved processed and evaluated values of the detected mechanical vibrations exceed or fall below a predetermined limit value over time,
- the sensor sorption agent is designed and/or selected in such a way that the exceeding or falling below of the limit value leading to the output of the warning signal corresponds to a predetermined, maximum permissible loading depth (bₘₐₓ) of the sorption agent moulded body (3).

2. Sorption filter (1) according to claim 1, **characterised in that** the predetermined, maximum permissible loading depth (bₘₐₓ) is in the range from 60 % to 98 % of the flow depth (d).

3. Sorption filter (1) according to claim 2, **characterised in that** the predetermined maximum permissible loading depth (bₘₐₓ) is in the range from 66 % to 67 %, in the range from 80 % ± 5 % or in the range from 95 % to 98 % of the flow depth (d).

4. Sorption filter (1) according to one of claims 1 to 3, **characterised in that** the sensor sorption agent is of the same material as the sorption agent (2), wherein the sensor sorption mould element (12) of the sensor unit (10) is arranged within the sorption agent moulded body (3) at a position which corresponds to the predetermined maximum permissible loading depth (bₘₐₓ) of the sorption agent moulded body (3).

5. Sorption filter (1) according to one of claims 1 to 4, **characterised in that** the sensor sorption mould element (12) is dimensioned or designed such that the natural frequency of the vibration system, which is formed by the sensor sorption mould element (12) held in the enclosure, is above the excitation frequency of the mechanical vibration exciter (13).

6. Sorption filter (1) according to one of claims 1 to 5, **characterised in that** the mechanical vibration exciter (13) is a piezo element.

## Revendications

1. Filtre à sorption (1), présentant un agent de sorption (2) qui, pour la filtration par sorption d'un gaz brut (6), est réalisé sous la forme d'un corps moulé d'agent de sorption (3) traversé par un écoulement unidirectionnel, ainsi qu'une unité de détection (10) pour surveiller l'état de charge de l'agent de sorption (2),
- le corps moulé d'agent de sorption (3) présentant une surface d'entrée (3.1) pour l'introduction du gaz brut (6) à filtrer et une surface de sortie (3.2) opposée à la surface d'entrée (3.1) et espacée dans le sens d'écoulement pour l'évacuation d'un gaz pur (7) formé à partir du gaz brut (6) après la filtration par sorption, la plus petite distance dans le sens de l'écoulement dans l'agent de sorption (2) traversé entre la surface d'entrée (3.1) et la surface de sortie (3.2) définissant une profondeur d'écoulement (d) du corps moulé d'agent de sorption (3), et
- dans le corps moulé d'agent de sorption (3) pendant le passage et la charge, une zone d'adsorption (4) formée transversalement à la direction d'écoulement entre l'agent de sorption chargé (2.2) et l'agent de sorption non chargé (2.1) étant délimité par un front d'absorption (5) par rapport à l'agent de sorption non chargé (2.1), la distance la plus grande dans la direction d'écoulement entre la surface d'entrée (3.1) et le front d'adsorption (5) définissant une profondeur de charge momentanée (b) du corps moulé d'agent de sorption (3),
**caractérisé en ce que**
- l'unité de détection (10) présente un élément de forme de sorption de détection (12) constitué d'un agent de sorption de détection, qui est maintenu et mis en contact dans un encadrement (11) sur au moins deux côtés opposés de l'élément de forme de sorption de détection (12), l'encadrement (11) étant conçu pour coupler des vibrations mécaniques dans l'élément de forme de sorption de détection (12) ainsi que pour les découpler en vue d'une détection par technique de signalisation,
- l'unité de détection (10) comprend en outre une unité de commande et d'évaluation (15) qui est reliée à l'encadrement (11) de l'élément de forme de sorption de détection (12) par une technique de signalisation pour le traitement et l'évaluation à résolution temporelle des vibrations mécaniques détectées, l'unité de détection (10) présentant un excitateur mécanique de vibrations (13), au moyen duquel des vibrations mécaniques sont aptes à être couplées et découplées dans l'élément de forme de sorption de détection (12) maintenu dans l'encadrement (11), et dans lequel l'élément de forme de sorption de détection (12) maintenu dans l'encadrement (11) est réalisé sous la forme d'une plaquette vibrante,
- l'élément de forme de sorption de détection (12) réalisé sous forme de plaquette vibrante est maintenu dans l'encadrement (11) avec des surfaces de plaque exposées de la plaquette vibrante sur au moins deux côtés opposés, perpendiculaires aux surfaces de plaque de la plaquette vibrante et perpendiculaires aux surfaces de plaque de la plaquette vibrante,
- l'unité de commande et d'évaluation (15) est conçue pour émettre un signal d'avertissement lorsque les valeurs traitées et évaluées avec une résolution temporelle des vibrations mécaniques détectées sont supérieures ou inférieures à une valeur limite prédéfinie dans le déroulement temporel,
- l'agent de sorption de détection est conçu et/ou sélectionné de telle sorte que le dépassement vers le haut ou vers le bas de la valeur limite conduisant à l'émission du signal d'avertissement correspond à une profondeur de charge (bₘₐₓ) prédéfinie et maximale admissible du corps moulé d'agent de sorption (3).

2. Filtre à sorption (1) selon la revendication 1, **caractérisé en ce que** la profondeur de charge maximale admissible prédéterminée (bₘₐₓ) se situe dans la plage de 60 % à 98 % de la profondeur d'écoulement (d).

3. Filtre à sorption (1) selon la revendication 2, **caractérisé en ce que** la profondeur de charge maximale admissible prédéterminée (bₘₐₓ) se situe dans la plage de 66 % à 67 %, dans la plage de 80 % ± 5 % ou dans la plage de 95 % à 98 % de la profondeur d'écoulement (d).

4. Filtre à sorption (1) selon l'une des revendications 1 à 3, **caractérisé en ce que** l'agent de sorption de détection est de la même substance que l'agent de sorption (2), l'élément de forme de sorption de détection (12) de l'unité de détection (10) étant disposé à l'intérieur du corps moulé d'agent de sorption (3) à une position qui correspond à la profondeur de charge maximale admissible prédéterminée (bₘₐₓ) du corps moulé d'agent de sorption (3).

5. Filtre à sorption (1) selon l'une des revendications 1 à 4, **caractérisé en ce que** l'élément de forme de sorption de détection (12) est dimensionné ou conçu de telle sorte que la fréquence propre du système vibratoire formé par l'élément de forme de sorption de détection (12) maintenu dans l'encadrement est supérieure à la fréquence d'excitation de l'excitateur mécanique de vibrations (13).

6. Filtre à sorption (1)) selon l'une des revendications 1 à 5, **caractérisé en ce que** l'excitateur mécanique de vibrations (13) est un élément piézoélectrique.
